Europäisches Patentamt

European Patent Office

Office européen des brevets

(19)

(11) Veröffentlichungsnummer : **0 428 771 B1**

(12) **EUROPÄISCHE PATENTSCHRIFT**

(45) Veröffentlichungstag der Patentschrift :
01.02.95 Patentblatt 95/05

(51) Int. Cl.$^6$ : **G06F 13/42, G06F 5/06**

(21) Anmeldenummer : 89121507.1

(22) Anmeldetag : 21.11.89

(54) Zweiwege-Datenübergabe-Einrichtung.

(43) Veröffentlichungstag der Anmeldung :
29.05.91 Patentblatt 91/22

(45) Bekanntmachung des Hinweises auf die
Patenterteilung :
01.02.95 Patentblatt 95/05

(84) Benannte Vertragsstaaten :
DE FR GB IT NL

(56) Entgegenhaltungen :
DE-A- 3 235 243
US-A- 4 357 658
US-A- 4 592 019
ELECTRONIC DESIGN. vol. 37, no. 21, Oktober
1989, HASBROUCK HEIGHTS, N Seiten 93 - 94;
D. Bursky: "Settable flags add, flexibility to
FIFO ICs"

(56) Entgegenhaltungen :
PROCEEDING AUTOTESCON Oct. 22-24,1985
Uniondale, NEW-YORK, US, 85CH2177.4,Seiten 309 - 314; G. Anderson: "Modular system
interface bus providing new opportunities for
modular measurement systems"
MICROPROCESSORS AND MICROSYSTEMS.
vol. 12, no. 3, April 1988, LONDON GB Seiten
130 - 134; G. Inett: "Multiprocessing and the
STEbus"

(73) Patentinhaber : Deutsche ITT Industries GmbH
Hans-Bunte-Strasse 19
D-79108 Freiburg (DE)

(72) Erfinder : Caesar, Knut, Dipl.-Ing.
Am See 1
D-7803 Gundelfingen (DE)
Erfinder : Himmel, Thomas, Dipl.-Ing.
St. Peter Strasse 12
D-7832 Kenzingen (DE)
Erfinder : Schmidt, Ulrich, Dr.-Ing.
Welchental 10
D-7800 Freiburg i. Br. (DE)
Erfinder : Uhlenhoff, Arnold, Dipl.-Ing.
Hölderlinstrasse 33
D-7830 Emmendingen (DE)

**Beschreibung**

Zweiwege-Datenübergabe-Einrichtungen (= Handshake-Port) werden für die Datenschnittstellen miteinander kommunizierender Datenverarbeitungseinrichtungen verwendet, wenn der in ein- oder bidirektionaler Richtung erfolgende Datentransfer nicht synchron zu einem gemeinsamen Systemtakt und/oder nicht kontinuierlich erfolgt. Ein Kernstück derartiger Ports ist die Abwicklung eines "Handshake"-Protokolls, das sicherstellt, daß nur dann Daten übertragen werden, wenn auf der Senderseite tatsächlich Daten zur Verfügung stehen und wenn die Empfängerseite auch tatsächlich aufnahmebereit ist. Bei komplexeren Systemen sind diese Voraussetzungen nicht ohne weiteres erfüllt. Beispielsweise kann der Systemtakt durch Laufzeitunterschiede erhebliche Phasenabweichungen aufweisen, so daß eine sichere Datenübernahme nicht mehr gewährleistet ist. Die Laufzeitunterschiede werden dabei um so kritischer, je höher die Frequenzen des Systemtakts sind.

Eine andere Schwierigkeit bei komplexeren Systemen ist, daß nicht mehr einfach abgeschätzt werden kann, wann ein Datenwort tatsächlich zur Verfügung steht. Dies hängt beispielsweise von internen Verzögerungszeiten und Durchlaufzeiten der Datenverarbeitungsschaltungen ab, die bei Parallelverarbeitung in Pipeline-Technik noch schwieriger zu durchschauen sind.

Die unterschiedliche Verfügbarkeit von Datenworten wird in der Regel zwischen einer Datensende- und einer Datenempfangseinrichtung mittels Speichereinrichtungen ermöglicht. Wenn die Reihenfolge der Datenworte dabei nicht geändert wird, eignet sich für die variable Zwischenspeicherung ein serieller Pufferspeicher. In DE-A 32 35 243 ist ein derartiger, universell einsetzbarer Pufferspeicher beschrieben. Mittels mindestens eines Adressenzeigers werden die freizugebenden bzw. auszulesenden Speicherplätze angegeben, wobei das Speichern und das Lesen unabhängig gesteuert werden kann.

In "Electronic Design", Band 37, Nr. 21, 12. Oktober 1989, Seiten 93-94, Cleveland (OH), US beschreibt D. BURSKY in einem Aufsatz "Settable Flags Add Flexibility to FIFO ICs" einen weiteren Pufferspeicher für 1024 Worte, der die Ein- und Ausgabeschnittstelle von Datenverarbeitungssystemen sehr flexibel macht. Je nach dem Füllungsgrad des Pufferspeichers (= FIFO) werden Flag-Signale gesetzt, die folgende Füllungszustände signalisieren: halbvoll, voll und leer. Daneben gibt es noch zwei weitere Flag-Signale, die einen nahezu vollen bzw. einen nahezu leeren Zustand anzeigen.

In "IEEE Transactions on Computers", Bd.C-36, Nr.12, Dezember 1987, Seiten 1523 bis 1538 ist unter dem Titel: "The Warp Computer: Architecture,Implementation, and Performance" ein Großrechner beschrieben, dessen auf Steckkarten aufgebaute Prozessormodule mittels eines Handshake-Protokolls Daten miteinander austauschen. Die Kommunikation zwischen den einzelnen Prozessormodulen erfolgt über Warteschlangen-Speicher, wobei bei vollem bzw. leerem Warteschlangen-Speicher (= First-In-First-Out-Speicher = FIFO-Speicher) das sendende bzw. empfangende Modul durch ein Stopsignal so lange blockiert wird, bis der Datenverkehr über den Warteschlangen-Speicher wieder abgewickelt werden kann, weil dort freie Plätze für neue Daten entstanden bzw. neue Daten verfügbar sind. Eine derartige datengesteuerte Datenübergabe-Einrichtung erweist sich als äußerst vorteilhaft, wenn eine Vielzahl derartiger Schnittstellen an der Datenverarbeitung beteiligt sind. Für den Programmierer wird die gesamte Datenverarbeitung dadurch gleichsam "durchsichtig".

Es ist daher Aufgabe der in den Ansprüchen gekennzeichneten Erfindung, eine Zweiwege-Datenübergabe-Einrichtung für die Datenschnittstelle zwischen einer Datenquelle und einer dazu asynchron laufenden Datensenke anzugeben, die für einen Datentransfer lediglich eine einzige Taktperiode erfordert, wobei wahlweise lediglich mittels einer Programmodifikation der Datentransfer auf eine beliebige Anzahl von Taktperioden, insbesondere zwei, erweiterbar ist, und die ferner Mittel enthält, die bei ungleichförmiger Datenerzeugungs- und Datenabnahmerate der zeitlichen Pufferung der übertragenen Daten dienen, wobei bei vollgelaufenem Puffer die Datenquelle und bei leergelaufenem Puffer die Datensenke in ihrer Signalverarbeitung zu unterbrechen ist.

Die Erfindung und weitere Vorteile werden nun anhand der Figuren der Zeichnung näher erläutert:

Fig.1 zeigt schematisch als Blockschaltbild ein Ausführungsbeispiel einer Zweiwege-Datenübergabe-Einrichtung nach der Erfindung mit Auffangspeicher und Rückwärts- und Vorwärts-Zellen-Stopsignal,

Fig.2 zeigt einige Zeitdiagramme zum Handshake-Protokoll,

Fig.3 zeigt schematisch als Flußdiagramm den Ablauf einer Leseanweisung,

Fig.4 zeigt schematisch als Flußdiagramm den Ablauf einer Schreibanweisung und

Fig.5 zeigt schematisch als Blockschaltbild ein Ausführungsbeispiel eines FIFO-Speichers nach der Erfindung.

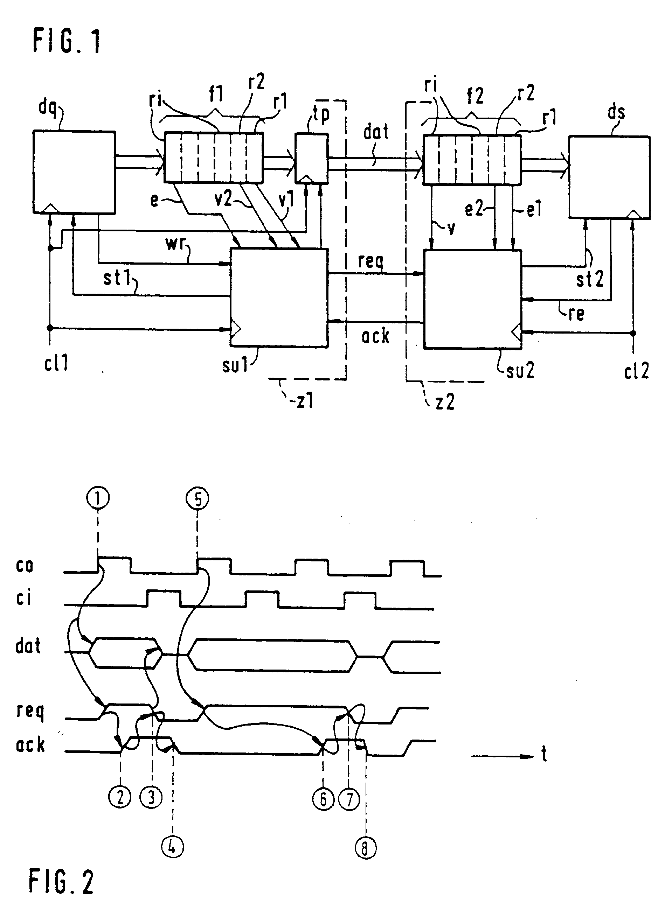

Die in Fig.1 dargestellte Zweiwege-Datenübergabe-Einrichtung (= Handshake-Port) enthält zwei Daten austauschende Zellen, wobei die erste Zelle z1 als Datensender und die zweite Zelle z2 als Datenempfänger dient. Die eigentlichen Signalverarbeitungsschaltungen der ersten bzw. zweiten Zelle z1, z2 sind als Datenquelle dq bzw. Datensenke ds schematisch zusammengefaßt. Die von der Datenquelle dq gelieferten Daten werden in einem Sender-Auffangspeicher f1 gepuffert, der mindestens über ein erstes und ein zweites Auffangregister r1, r2 und eventuell eine vorgegebene Anzahl weiterer Auffangregister ri verfügt. In der Regel ist der Sender-Auffangspeicher als FIFO-Speicher (= First-In-First-Out-Speicher) ausgeführt. Dem FIFO-Speicher ist eine Tor/Pufferschaltung tp nachgeschaltet, die auch als Treiberschaltung für die zu übertragenden Daten dat dient.

Dem Sender-Auffangspeicher f1 entspricht auf der Empfängerseite der Empfänger-Auffangspeicher f2, der ebenfalls als FIFO-Speicher ausgeführt ist. Er enthält mindestens ein erstes und ein zweites Auffangregister r1, r2 sowie eventuell eine vorgegebene Anzahl weiterer Auffangregister ri. Bereits ein einziger Auffangspeicher f1 bzw. f2 auf der Sender- oder Empfängerseite ermöglicht, daß die Datensenke ds bzw. die Datenquelle dq kurzzeitig unterschiedliche Datenabnahme- bzw. Datenerzeugungsraten aufweisen können. Der Ausgleich findet über die Auffangspeicher statt. Je länger hierbei die Ausgleichsperiode ist, desto höher muß die Anzahl der verfügbaren Auffangregister ri auf der Sender- oder Empfängerseite sein. Wie später noch dargestellt wird, erfordert die Senderseite schon mindestens zwei Auffangregister dadurch, daß bestimmte Ablaufphasen des Handshake-Protokolls die Datenquelle dq nicht schnell genug abschalten können und die dabei erzeugten Daten aufgefangen werden müssen.

Die Ablaufsteuerung des Datentransfers erfolgt durch das Sender- bzw. das Empfänger-Schaltwerk su1, su2, die den Datentransfer über das "Handshake"-Protokoll abwickeln. Wird dem Sender-Schaltwerk su1 durch ein Schreibsignal wr aus der Datenquelle dq signalisiert, daß diese ein Datenwort in das sendende Port schreiben möchte, dann prüft das Sender-Schaltwerk su1, ob der Sender-Auffangspeicher f1 aufnahmebereit ist, also noch freie Auffangregister enthält oder ob alle Auffangregister voll sind. Für diese Information liefert der Sender-Auffangspeicher f1 drei Statussignale:

1. ein erstes Status-voll-Signal v1, wenn alle Auffangregister voll sind,
2. ein zweites Status-Voll-Signal v2, wenn alle bis auf ein Auffangregister voll sind und schließlich
3. ein Status-leer-Signal e, wenn alle Auffangregister leer sind.

Mit diesen Status-Signalen lassen sich folgende Füllungsgrade des Empfänger-Auffangsspeichers f1 darstellen:

```
Status- !  Inhalt des Sender-Auffangspeichers f1
signale !
        !alle      !alle bis auf !mindestens !alle
        !Register  !ein Register !zwei leere  !Register
        !voll      !    voll      !Register    !leer
        !          !             !            !
   v1   !    1     !   (0)       !     0      !  (0)
   v2   !   (1)    !    1        !     0      !  (0)
   e    !   (0)    !   (0)       !     0      !   1
        !          !             !            !
```

Entsprechend liefert auf der Empfängerseite der Empfänger-Auffangspeicher f2 ebenfalls drei Statussignale:

1. ein erstes Status-leer-Signal e1, wenn alle Auffangregister leer sind,
2. ein zweites Status-leer-Signal e2, wenn alle bis auf ein Auffangregister leer sind und schließlich
3. ein Status-voll-Signal v, wenn alle Auffangregister voll sind.

| Status-signale | Inhalt des Empfänger-Auffangspeicher f2 | | | |
|---|---|---|---|---|
| | alle Register leer | alle bis auf ein Register leer | mindestens zwei volle Register | alle Register voll |
| e1 | 1 | (0) | 0 | (0) |
| e2 | (1) | 1 | 0 | (0) |
| v | (0) | (0) | 0 | 1 |

Dem Empfänger-Schaltwerk su2 wird durch ein Lesesignal re aus der Datensenke ds mitgeteilt, daß ein Datenwort dat aus dem Port gelesen werden soll. Die Verfügbarkeit oder Nichtverfügbarkeit von Datenwörtern im Empfänger-Auffangspeicher f2 wird dabei wie eben beschrieben dem Empfänger-Schaltwerk su2 durch die drei Statussignale e1, e2, v signalisiert.

Das eigentliche Handshake-Protokoll der beiden Schaltwerke su1, su2 ist in seinem Zeitablauf schematisch in Fig.2 dargestellt. Es beginnt zum Zeitpunkt 1 mit dem Anforderungssignal (= Request-Signal) req, das dem Empfänger-Schaltwerk su2 anzeigt, daß ein Datenwort dat transferiert werden soll. Die Übernahme dieses Datenworts wird dem Sender-Schaltwerk su1 durch Setzen eines Quittungssignals (= Acknowledge-Signal) ack zum Zeitpunkt 2 angezeigt. Der Empfang des Quittungssignals ack löst im Sender-Schaltwerk su1 zum Zeitpunkt 3 die Rücksetzung des Anforderungssignals req aus, die im Empfänger-Schaltwerk die Rücknahme des Quittungssignals ack zum Zeitpunkt 4 bewirkt. In Fig.2 ist als Beispiel zum Zeitpunkt 5 angenommen, daß die zu übertragenden Daten dat nicht sofort, sondern erst eine Taktperiode später vom Empfänger übernommen werden können. Das Quittungssignal wird somit erst eine Taktperiode später zum Zeitpunkt 6 gesetzt. Das restliche Handshake-Protokoll läuft dann ohne Verzögerung zum Zeitpunkt 7 und 8 ab. Erst dann kann ein neuer Datenübertragungszyklus beginnen.

Die Einhaltung dieser Ablauffolge gewährleistet, daß unabhängig von der Ablaufdauer des Handshake-Protokolls die Datenübergabe sichergestellt ist. Durch geeignete Auslegung der einzelnen Schaltungsteile kann das Handshake-Protokoll ohne weiteres auch bei sehr hochfrequenten Takten innerhalb einer Taktperiode abgewickelt werden. Es ergeben sich jedoch Probleme der Zellensteuerung, wenn Steuerungsabläufe mehr als eine Taktperiode erfordern, weil sie beispielsweise eine Vorbereitungsphase und eine Ausführungsphase enthalten. Hierzu gehören die Rückwärts- und die Vorwärts-Zellen-Stopsignale st1, st2, die von Statussignalen abhängig sind, denn das Setzen der Statussignale erfolgt in einer anderen Taktperiode als ihre Auswertung. Ein derartiger Fall liegt beispielsweise vor, wenn die Datenquelle dq abgeschaltet werden muß, weil das Quittungssignal ack von dem Empfänger-Schaltwerk su2 nicht zurückgesetzt wird und eine schaltungsbedingte Latenz zwischen der Rücksetzung des Quittungssignals und der Abschaltung der Datenquelle dq besteht, so daß die Datenquelle dq noch ein oder zwei Takte weiterläuft. In diesem Fall sind die von der Datenquelle dq noch erzeugten Daten jeweils in einem Auffangregister auf der Senderseite aufzufangen und erst dann freizugeben, wenn das Quittungssignal ack zurückgesetzt wird. Statussignale, die den Füllungsgrad dieser Auffangregister anzeigen, sind für das Abschalten der Datenquelle nicht erforderlich, wenn das Einschalten der Datenquelle dq die gleiche Taktanzahl erfordert.

Ein anderer derartiger Fall tritt beispielsweise ein, wenn zwei Leseanweisungen re unmittelbar aufeinander folgen, jedoch nur ein Datenwort im Empfänger-Auffangspeicher f2 verfügbar ist. Hier würde die zweite Leseanweisung fälschlicherweise ein noch nicht gesetztes Status-leer-Signal vorfinden und davon ausgehen, daß der Empfänger-Auffangspeicher f2 ein Datenwort enthält - dies ist jedoch nicht mehr zutreffend.

Ähnliches erfolgt im Sender-Schaltwerk su1, das bei zwei unmittelbar aufeinanderfolgenden Schreibanweisungen wr zu spät erkennt, daß der Sender-Auffangspeicher f1 voll ist, wenn bei der ersten Schreibanweisung nur noch ein Register im Sender-Auffangspeicher f1 verfügbar war. Das Abschalten der Datenquelle dq mittels des aus dem Sender-Schaltwerk su1 stammenden Rückwärts-Zellen-Stopsignals st1 käme also um einen Takt zu spät, so daß ein Datenwort der Datenquelle dq durch den vollen Speicher verloren ginge.

Die Abschaltung der Datensenke ds mittels des dem Empfänger-Schaltwerk su2 entstammenden Vorwärts-Zellen-Stopsignals st2 käme ebenfalls um eine Taktperiode zu spät, so daß die Datensenke ds fälschlicherweise den leeren Empfänger-Auffangspeicher f2 auslesen würde.

Hier schafft die Erfindung Abhilfe, indem der Sender- bzw. Empfänger-Auffangspeicher f1, f2 vorausschauend durch ein zusätzliches Statussignal, nämlich das zweite Status-voll-Signal v2 bzw. das zweite Status-leer-Signal e2, überwacht wird. Die Vorbereitung des überlangen Steuerungsablaufes wird auf diese Weise zeitlich vorverlegt. Die Rücknahme dieser Vorbereitung, wenn statt der kritischen, zur Kollision führenden Steueranweisung, ein anderer, kurzer Steuerungsablauf erfolgt, darf natürlich keine Verzögerung bewirken.

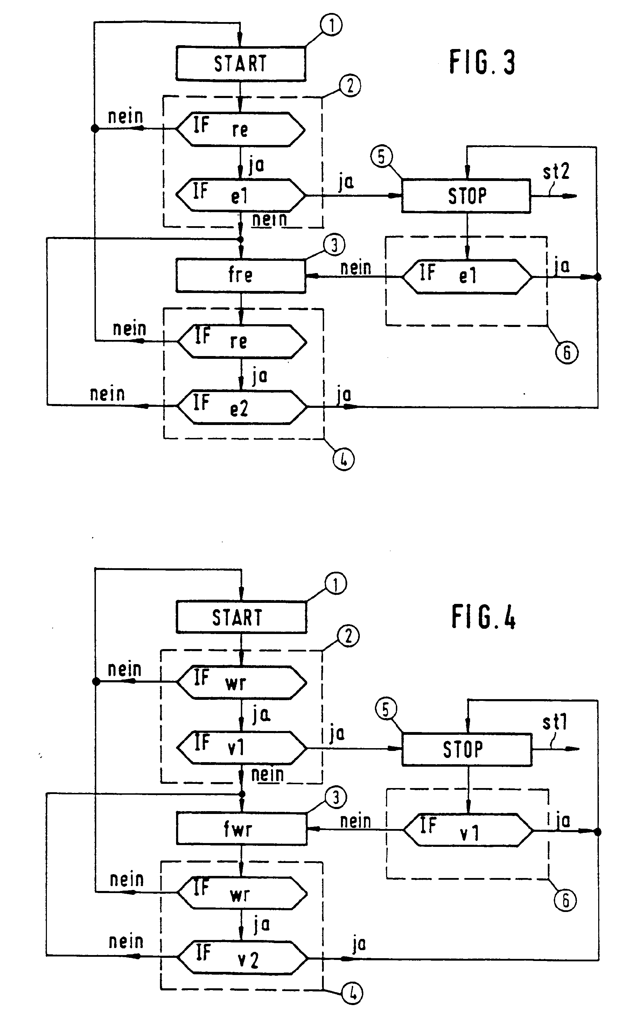

Zur Verdeutlichung ist in Fig.3 schematisch als Flußdiagramm der Ablauf einer Leseanweisung re dargestellt. Die rechteckigen Kästchen symbolisieren dabei, daß eine Anweisung ausgeführt wird, wobei dies während der co-Phase des Taktes c12 stattfindet. Die sechseckigen Kästchen symbolisieren dabei die während der ci-Phase zu lesenden Anweisungen mit den zugehörigen Bedingungen. Die zugehörige Ausführung erfolgt dann während der nächsten co-Phase. Diese Bedingungen sind als Ja/Nein-Entscheidungen im Flußdiagramm dargestellt. Das Setzen dieser Bedingungssignale erfolgt während der ci-Phase des Taktes c12.

Das Flußdiagramm beginnt zum Zeitpunkt 1 in der co-Phase mit der Durchführung einer beliebigen Anweisung, hier "Start" genannt. Zum Zeitpunkt 2, also während der ci-Phase, wird die nächste Programmanweisung und als Bedingung das erste Status-leer-Signal e1 geladen. Handelt es sich hierbei nicht um eine Leseanweisung re, dann wird eine der üblichen Anweisungen durchgeführt, was durch einen Pfeil auf den Eingang der Start-Anweisung dargestellt ist. Im Falle einer Leseanweisung re ist der weitere Gang vom Schaltzustand des ersten Status-leer-Signals e1 abhängig. Ist dieses "0", also nicht gesetzt, dann wird während der nächsten co-Phase die Leseanweisung re ausgeführt, was im Flußdiagramm durch den Lese-Block fre dargestellt ist. Dies erfolgt zum Zeitpunkt 3.

War der Empfänger-Auffangspeicher f2 jedoch leer, was durch Setzen "1" des ersten Status-leer-Signals e1 angezeigt wird, dann wird die Signalverarbeitung in der Datensenke ds angehalten, was im Flußdiagramm durch den Schaltungsblock "Stop" mit dem Vorwärts-Zellen-Stopsignal st2 dargestellt ist. Wenn dieser Zustand eingeleitet ist, dann bleibt der Zustand der Datenverarbeitung in der Datensenke ds während der co-Phase gleichsam eingefroren. Dieses Einfrieren wird so lange aufrechterhalten, bis das erste Status-leer-Signal e1 vom Empfänger-Auffangspeicher f2 zurückgesetzt wird, also den Zustand "0" annimmt. Je nach dem vorhandenen Zustand durch des ersten Status-leer-Signals e1 wird während der ci-Phase entweder eine neue Warteschleife oder die Ausführung der Leseanweisung eingeleitet. Bei nicht gesetztem ersten Status-leer-Signal e1 zeigt der Pfeil daher auf den Lese-Block fre, wie zum Zeitpunkt 3.

Die Ausführung fre dieser Leseanweisung re löst für die nächste Anweisung folgende Vorbereitungen aus. Vom Empfänger-Auffangregister f2 wird hierzu das zweite Status-leer-Signal e2 übernommen und intern folgende Ausführungsbedingung geschaltet:

1. Wenn die nächste Anweisung keine Leseanweisung re ist, dann soll diese Anweisung ausgeführt werden, was im Flußdiagramm durch einen Rücksprung auf den Start-Block dargestellt ist.

2. Ist die nächste Anweisung eine Leseanweisung re, dann wird sie nur ausgeführt wenn das zweite Status-leer-Signal e2 nicht gesetzt, also "0" ist. Im anderen Fall, also bei gesetztem zweiten Status-leer-Signal e2, wird statt der nächsten Leseanweisung ein Vorwärts-Zellen-Stop st2 ausgeführt, was durch einen Pfeil auf den Eingang des Stop-Blockes dargestellt ist. Anstatt der beabsichtigten Ausführung der zweiten Leseanweisung re zum Zeitpunkt 5 während der co-Phase, erfolgt das Einfrieren des vorhandenen Daten-Zustandes.

In der darauffolgenden ci-Phase, also zum Zeitpunkt 6, ist für den weiteren Programmablauf nur der Zustand des ersten Status-leer-Signals e1 maßgebend. Bei gesetztem Status-leer-Signal e1 wird eine weitere Warteschleife ausgeführt und bei nichtgesetztem Signal die Leseanweisung re.

Da nach einer zweiten Leseanweisung unmittelbar auch weitere Leseanweisungen folgen können, erfolgt der Rücksprung bei nichtgesetztem zweitem Status-leer-Signal e2 nicht auf den Start-Block, sondern auf den Lese-Block fre. Solange Leseanweisungen aufeinander folgen und der Empfänger-Auffangspeicher f2 mindestens zwei Datenworte enthält, wird diese Schleife nicht verlassen.

Der Überwachung unmittelbar aufeinander folgender Leseanweisungen auf der Empfängerseite entspricht die Überwachung unmittelbar aufeinander folgender Schreibanweisungen auf der Senderseite. Dazu zeigt Fig.4 schematisch das Flußdiagramm. Wegen der genauen Entsprechung der beiden Flußdiagramme von Fig.3 und Fig.4 erübrigt sich eine nochmalige ausführliche Beschreibung. Es entsprechen sich: die Leseanweisung re und die Schreibanweisung wr, das erste Status-leer-Signal e1 und das erste Status-voll-Signal v1, das zweite Status-leer-Signal e2 und das zweite Status-voll-Signal v2, die Ausführung fre der Leseanweisung re und die Ausführung fwr der Schreibanweisung wr und schließlich das Vorwärts-Zellen-Stopsignal st2 und das Rückwärts-Zellen-Stop-Signal st1.

Die Grundeigenschaft des Flußdiagramms nach Fig.4 besteht darin, daß bei unmittelbar aufeinanderfolgenden Schreibanweisungen wr mindestens dann eine Warteschleife zwischengeschaltet wird, wenn das zweite Status-voll-Signal v2 signalisiert, daß bei der Ausführung fwr der ersten Schreibanweisung wr nur noch ein Register im Sender-Auffangspeicher f1 Daten erhalten kann. Wenn weitere freie Datenplätze im Sender-Auffangspeicher f1 verfügbar sind, dann erfolgt bei unmittelbar aufeinanderfolgenden Schreibanweisungen wr der Rücksprung auf den Schreib-Block fwr, der die Schreibanweisung wr während der co-Phase ausführt.

In Fig.2 ist zwischen dem Zeitpunkt 1 und dem Zeitpunkt 4 der Regelfall dargestellt, daß die Datenübertragung während einer einzigen Taktperiode stattfindet. Die nächste Datenübertragung vom Zeitpunkt 5 bis zum Zeitpunkt 8 ist dem gegenüber verlängert, weil die Abnahme der Daten erst verspätet zum Zeitpunkt 6 erfolgt; der Empfänger-Auffangspeicher f2 war voll. Die Verlängerung dieses Datentransfers erfolgte unbeabsichtigt.

Bei Datenschnittstellen, die über eine Chipgrenze hinweg führen, ist bei hohen Taktfrequenzen jedoch kaum gewährleistet, daß der Datentransfer innerhalb einer Taktperiode abgewickelt werden kann. Dies muß bei der Programmgestaltung berücksichtigt werden, indem man den Datentransfer über derartige Schnittstellen bewußt auf die halbe Datenübertragungsrate oder noch weniger reduziert. Hierfür gibt es zwei Möglichkeiten:

1. zwischen zwei auf ein Port zugreifenden Schreibanweisungen re, die unmittelbar aufeinander folgen, wird mindestens ein nop-Befehl (= no operation) eingefügt oder

2. auf der Senderseite wird das Handshake-Port höchstens mit der halben Taktrate über die Schreibanweisungen wr angesteuert.

Eine weitere Verbesserung ergibt sich, wenn die halbe Taktrate auf der Sender- und der Empfängerseite, auf eine mittlere Datenübertragungsrate bezogen wird. Dann ist für eine gewisse Zeit eine unmittelbare Aufeinanderfolge von Schreib- oder Leseanweisungen erlaubt; die zeitliche Pufferung erfolgt jedoch durch weitere Auffangregister ri im Sender-oder Empfänger-Auffangspeicher f1, f2. Dabei ist die vorgegebene Anzahl der weiteren Auffangregister ri im Sender-Auffangspeicher f1 mindestens so groß wie die Anzahl der unmittelbar aufeinanderfolgenden Schreibanweisungen wr auf das Port.

Die Funktion derartiger Zweiwege-Datenübergabe-Einrichtungen ist somit unabhängig von der Phasenlage oder Frequenz der beiden Takte cl1, cl2 gewährleistet. Reicht eine Taktperiode nicht mehr aus, insbesondere wenn die Datenübergabe über Chipgrenzen erfolgt, kann der zeitliche Spielraum für die Datenübertragung durch die angegebenen Maßnahmen beliebig verlängert werden. Es ist nur für ausreichende Pufferung der Daten und für eine im Mittel erniedrigte Schreib- und Leserate auf das jeweilige Port zu achten.

Ganz besonders vorteilhaft erweisen sich derartige Zweiwege-Datenübergabe-Einrichtungen bei einem datengesteuerten Arrayprozessor, der eine Vielzahl von Zellen enthält, die mit ihren jeweiligen Nachbarzellen oder über die Chipgrenze hinweg Daten austauschen. Derartige Arrayprozessoren zur Signalverarbeitung in Echtzeit, insbesondere von Videosignalen, erfordern sehr hohe Taktfrequenzen, beispielsweise bis 125 MHZ. Die erfindungsgemäße Zweiwege-Datenübergabe-Einrichtung ermöglicht hierbei den Datentransfer für eine große Verarbeitungstiefe, beispielsweise die Abwicklung eines Dreiadreßbefehls mit zwölfstelligen Binärzahlen innerhalb einer Taktperiode, vgl. die gleichrangige europäische Patentanmeldung EP-A-428770. Da dieser monolithisch integrierte Arrayprozessor nach dem MIMD-Prinzip (MIMD = Multiple-Instructions, Multiple-Data) funktioniert, kann er für die verschiedensten Aufgaben verwendet werden. Somit ist nicht voraussagbar, wie lange einzelne Zellen eventuell im Wartezustand verharren müssen. Ihre Datenquellen dq und ihre Datensenken ds sind daher als statische oder quasistatische Teilschaltungen ausgeführt, die den jeweiligen Datenzustand bei einem beliebig langen Zellenstop beibehalten. Als "quasistatisch" werden auch dynamische Teilschaltungen bezeichnet, die über Auffrischzyklen den jeweiligen Zustand beliebig lange erhalten.

Die Verwendung derartiger statischer oder quasistatischer Teilschaltungen in den datenaustauschenden Zellen z1, z2 ist somit trotz des höheren Schaltungsaufwandes immer dann von Vorteil, wenn nicht genau vorausgesagt werden kann, wie lange der jeweilige Wartezustand anhält.

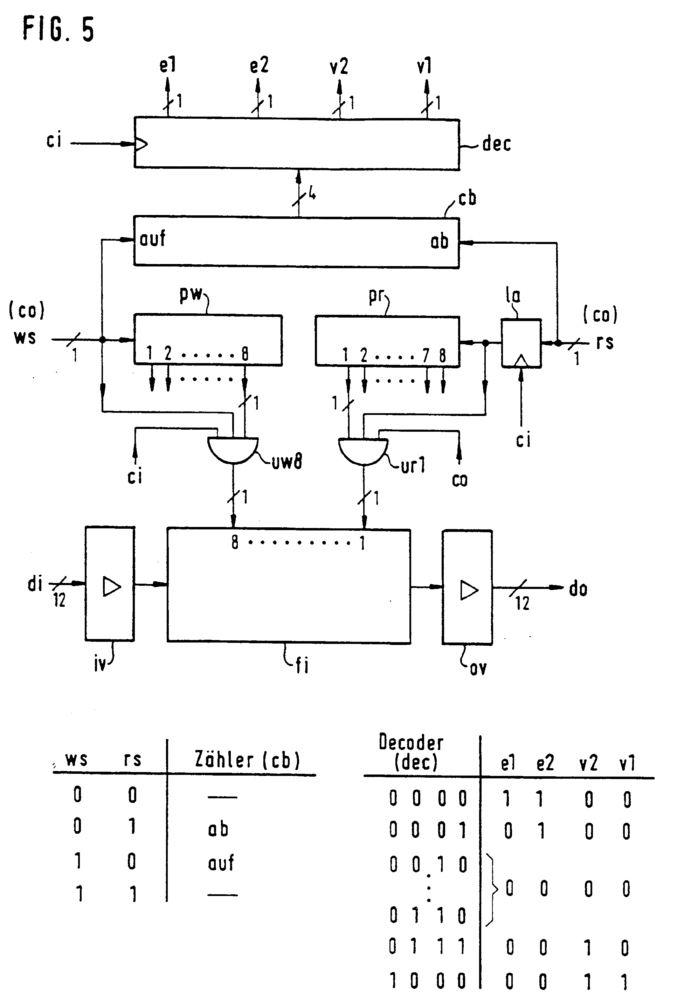

In Fig.5 ist schematisch als Blockschaltbild ein Ausführungsbeispiel eines als Auffangspeicher dienenden FIFO-Speichers nach der Erfindung dargestellt, der neben dem üblichen Status-leer-Signal e, e1 bzw. Status-voll-Signal v, v1 zusätzlich das zweite Status-leer-Signal e2 bzw. das zweite Status-voll-Signal v2 abgibt. Alle diese Status-Signale beziehen sich auf den Füllungsgrad des eigentlichen Datenspeichers fi, der im angenommenen Beispiels acht zwölfstellige Daten aufnehmen kann. Die einzulesenden Daten di werden über einen Eingangsverstärker iv zugeführt und die auszulesenden Daten do über einen Ausgangsverstärker ov abgegeben.

Die Funktionsweise des eigentlichen Datenspeichers fi ist folgende:

Ein vom Schreibsignal ws gesteuerter Schreib-Zeiger pw gibt die Schreibadresse an, in die das Datenwort di zu schreiben ist. Das nächste Schreibsignal ws erhöht die Schreibadresse um eine Position. Dies erfolgt solange, bis der Schreib-Zeiger pw wieder auf die erste Adresse zurückspringt.

In gleicher Weise wird durch das Lesesignal rs über einen Lese-Zeiger pr die Ausleseadresse bestimmt. Die Ausgangssignale der beiden Zeiger werden im eins-aus-8-Code ausgegeben und durch acht UND-Gatter mit den Schreib-, Lese- und Taktsignalen verknüpft. Von den acht UND-Verknüpfungsgattern des Schreib- bzw. Lese-Zeiger pw, pr sind in Fig.5 lediglich das achte UND-Lese-Gatter uw8 bzw. das erste UND-Schreib-Gatter ur1 dargestellt.

Parallel zur Ansteuerung des Schreib-Zeiger pw steuert das Lesesignal ws den Aufwärtszähleingang auf eines vierstelligen Binärzählers cb an, dessen Abwärtszähleingang ab vom Lesesignal rs getaktet wird. Entsprechend der in Fig.5 dargestellten linken Tabelle wird der Zähler cb jedoch nur dann aufwärts oder abwärts gezählt, wenn entweder nur das Lese-Signal rs oder nur das Schreibsignal ws anliegen. In allen anderen Fällen bleibt der Zählerstand erhalten. Als Anfangsbedingung werden alle Stellen des Zählers cb und der beiden Pointer pw, pr auf null gesetzt.

Die vier Binärstellen des Zählers cb werden in der Decodierschaltung dec nach der in Fig.5 angegebenen rechten Tabelle decodiert. Ist beispielsweise der Datenspeicher fi leer, dann sind alle vier Binärstellen des Zählers cb "0". In diesem Fall setzt die Decodierschaltung das erste und das zweite Status-leer-Signal e1, e2. Enthält der Datenspeicher fi ein einziges Datenwort, dann ist die niedrigstwertige Stelle des Zählerausgangssignals gesetzt. In diesem Fall setzt die Decodierschaltung dec nur das zweite Status-leer-Signal e2.

Sind im Datenspeicher fi alle Register bis auf eines belegt, also sieben Register voll, dann ist der Wert des binärcodierten Ausgangssignales des Zählers cb ebenfalls sieben. In diesem Fall setzt die Decodierschaltung lediglich das zweite Status-voll-Signal v2. Sind alle acht Zellen des Datenspeichers fi voll, dann beträgt der Zählerstand acht, was in der Decodierschaltung dec das Setzen des ersten und des zweiten Status-voll-Signals v1, v2 auslöst.

In allen anderen Fällen, also vom Zählerstand 2 bis zum Zählerstand 6, setzt die Decodierschaltung dec keines der Statussignale. Es ist hier noch darauf hinzuweisen, daß das erste Status-leer-Signal e1 dem Status-leer-Signal e in Fig.1 entspricht und das erste Status-voll-Signal v1 dem Status-voll-Signal v.

Damit es beim gleichzeitigen Schreiben und Lesen der selben Speicher-Adresse nicht zur Kollision der beiden Zeiger pw, pr kommt, ist die Taktung des Lese-Zeigers pr durch ein "Latch" la um einen Halbtakt verzögert. Das Schreib- und das Lesesignal ws, rs wird nämlich während der co-Phase des Taktes ausgelöst, während das Latch das Lesesignal rs erst einen halben Takt später während der ci-Phase freigibt. Auf ähnliche Weise wird auch die Kollision der 16 UND-Gatter verhindert, indem die acht UND-Schreib-Gatter mit der ci-Phase verknüpft werden und die acht UND-Lese-Gatter mit der co-Phase.


## Patentansprüche

1. Zweiwege-Datenübergabe-Einrichtung (= Handshake-Port) für die Datenschnittstelle zweier Daten austauschender Zellen (z1, z2), die jeweils eine Datenquelle (dq) und eine Datensenke (ds) enthalten, mit
   - einem für jede Datenrichtung vorhandenen Sender- und einem Empfängerschaltwerk (su1, su2) zur Abwicklung des der Datenübergabe dienenden "Handshake"-Protokolls und zur Abgabe eines Rückwärts- bzw. eines Vorwärts-Zellen-Stopsignals (st1, st2),
   - einem ersten bzw. einem zweiten Takt (cl1, cl2) zur Synchronisation der Datenverarbeitung in der ersten bzw. in der zweiten Zelle (z1, z2),
   - mindestens einem Auffangspeicher (f1,f2) für jede Datenrichtung, wobei Statussignale (v1, v2, e; e1, e2, v) anzeigen, ob der Auffangspeicher aufnahmebereit bzw. ohne Daten ist,
   gekennzeichnet durch folgende Merkmale:
   - das Handshake-Protokoll ist innerhalb einer Taktperiode des ersten und des zweiten Taktes (cl1, cl2) abwickelbar,
   - als Auffangspeicher dient auf der Empfängerseite (z2) ein Empfänger-Auffangspeicher (f2), der mindestens zwei Auffangregister (r1, r2) enthält und der ein erstes und ein zweites Status-leer-Signal (e1, e2) setzt, die dem Empfängerschaltwerk (su2) signalisieren, daß alle bzw. alle bis auf eines der Auffangregister (r1, r2) leer sind,
   - der Empfänger-Auffangspeicher (f2) setzt ferner ein Status-Voll-Signal (v; v1), das dem Empfängerschaltwerk (su2) signalisiert, daß alle Auffangregister voll sind,
   - als Auffangspeicher dient auf der Senderseite (z1) ein Sender-Auffangspeicher (f1), der mindestens zwei Auffangregister (r1, r2) enthält und der ein erstes und ein zweites Status-voll-Signal (v1, v2) setzt, die dem Senderschaltwerk (su1) signalisieren, daß alle bzw. alle bis auf eines der Auffangregister voll sind,
   der Sender-Auffangspeicher (f1) setzt ferner ein Status-leer-Signal (e; e1), das dem Senderschaltwerk (su1) signalisiert, daß alle Auffangregister leer sind,
   - nach einer ersten Leseanweisung (re) eines Datenwortes aus dem Empfänger-Auffangspeicher (f2) wird nur dann eine unmittelbar folgende zweite Leseanweisung (re) ausgeführt, wenn das zweite Status-leer-Signal (e2) nicht gesetzt ist,
   - bei gesetztem zweiten Status-leer-Signal (e2) wird die Datensenke (ds) durch das Vorwärts-Zellen-Stopsignal (st2) in ihrer Funktion angehalten, wodurch die Ausführung der zweiten Leseanweisung mindestens um eine Taktperiode verzögert wird,

- nach einer ersten Schreibanweisung eines Datenwortes in den Sender-Auffangspeicher (f1) wird nur dann eine unmittelbar folgende zweite Schreibanweisung (wr) ausgeführt, wenn das zweite Status-Voll-Signal (v2) nicht gesetzt ist,
- bei gesetztem zweiten Status-Voll-Signal (v2) wird die Datenquelle (dq) durch das Rückwärts-Zellen-Stopsignal (st1) in ihrer Funktion angehalten, wodurch die Ausführung der zweiten Schreibanweisung (wr) mindestens um eine Taktperiode verzögert wird,
- nach einem Vorwärts- bzw. einem Rückwärts-Zellenstop ist der Zustand des zweiten Status-leer-Signals (e2) bzw. des zweiten Status-voll-Signals (v2) für die noch auszuführende zweite Lese- bzw. zweite Schreibanweisung ohne Bedeutung.

2. Zweiwege-Datenübergabe-Einrichtung nach Anspruch 1, dadurch gekennzeichnet, daß der Empfänger- und/oder der Sender-Auffangspeicher (f1, f2) mindestens eine vorgegebene Anzahl von weiteren Auffangregistern (ri) enthalten, die der Pufferung von Daten mit unterschiedlichen Erzeugungs- und Abnahmeraten dienen, wobei die Erzeugungs- und die Abnahmeraten innerhalb der durch die vorgegebene Anzahl bestimmten Taktperioden im Mittel gleich sind.

3. Zweiwege-Datenübergabe-Einrichtung nach Anspruch 2, dadurch gekennzeichnet, daß bei Datenschnittstellen, die über eine Chipgrenze hinweg verlaufen, der Datentransfer ohne Änderung des Handshake-Protokolls mindestens auf eine doppelte Taktperiode verlängerbar ist, indem zwischen zwei auf das Port zugreifende Schreibanweisungen, die unmittelbar aufeinanderfolgen, mindestens ein nop-Befehl (= no operation) eingefügt ist.

4. Zweiwege-Datenübergabe-Einrichtung nach Anspruch 2, dadurch gekennzeichnet, daß bei Datenschnittstellen, die über eine Chipgrenze hinweg verlaufen, der Datentransfer ohne Änderung des Handshake-Protokolls mindestens auf eine doppelte Taktperiode verlängerbar ist, indem auf der Senderseite das Port mit einem an die Schreibanweisungen gekoppelten Takt angesteuert ist, der höchstens die halbe Taktrate des ersten Taktes (cl1) aufweist.

5. Zweiwege-Datenübergabe-Einrichtung nach Anspruch 2, dadurch gekennzeichnet, daß die vorgegebene Anzahl der weiteren Auffangregister (ri) im Sender-Auffangspeicher (fi) mindestens so groß ist, wie die Anzahl der unmittelbar aufeinanderfolgenden Schreibanweisungen (wr) auf das Port und daß im Mittel das Port mit einem an die Schreibanweisungen gekoppelten Takt angesteuert ist, der höchstens die halbe Taktrate des ersten Taktes (cl1) aufweist.

6. Zweiwege-Datenübergabe-Einrichtung nach Anspruch 1, dadurch gekennzeichnet, daß sie der Datenkommunikation zwischen zwei asynchron getakteten Zellen dient.

7. Zweiwege-Datenübergabe-Einrichtung nach Anspruch 1, dadurch gekennzeichnet, daß die Datenquelle (dq) und die Datensenke (ds) statische oder quasistatische Teilschaltungen enthalten, die ihren Logikzustand bei einem beliebig langen Zellenstop beibehalten.

8. Zweiwege-Datenübergabe-Einrichtung nach einem der Ansprüche 1 bis 7 dadurch gekennzeichnet, daß derartige Zweiwege-Datenübergabe-Einrichtungen bei einem datengesteuerten, monolithisch integrierten Arrayprozessor mit einer Vielzahl von Zellen, die mit ihren jeweiligen Nachbarzellen oder über die Chipgrenze hinweg Daten austauschen, als Datenschnittstellen dienen.

9. Zweiwege-Datenübergabe-Einrichtung nach Anspruch 2, dadurch gekennzeichnet, daß der Sender- und der Empfänger-Auffangspeicher (f1, f2) folgende Teilschaltungen enthält:
- einen Datenspeicher (fi) mit n adressierbaren Registern,
- einen von einem Schreib- bzw. einem Lesesignal (ws, rs) gesteuerten Schreib- bzw. Lese-Zeiger (pw, pr), wobei der Schreib-Zeiger in der co-Phase und der Lese-Zeiger in der ci-Phase getaktet ist,
- einen Auf/Abwärtszähler (cb), dessen Aufwärts- bzw. Abwärtszähleingang (auf, ab) das Schreib-bzw. Lesesignal (ws, rs) zugeführt ist und
- eine Decodierschaltung (dec), die aus dem Zählerstand des Auf/Abwärtszählers (cb) das erste und das zweite Status-leer-Signal (e1, e2) und das erste und das zweite Status-voll-Signal (v1, v2) ableitet, wobei
- der Zählumfang des Schreib- und des Lese-Zeigers (pw, pr) sowie des Auf/Abwärtszählers (cb) gleich groß wie die Anzahl n der adressierbaren Register des Datenspeichers fi ist.

**10.** Zweiwege-Datenübergabe-Einrichtung nach Anspruch 1, gekennzeichnet durch folgende Merkmale:
- der Sender-Auffangspeicher (f1) weist mindestens so viele Auffangregister auf, wie Taktperioden zum Anhalten oder gleichlangen Starten der Datenquelle (dq) erforderlich sind und
- im Falle dieser Minimalanzahl von Auffangregistern sind Statussignale über den Füllungsgrad des Sender-Auffangspeichers (f1) nicht erforderlich.

**Claims**

**1.** Two-way data transfer device (= handshake port) for the data interface of two data-exchanging cells (z1, z2) each including a data source (dq) and a data sink (ds), comprising
- a transmitter sequential circuit (su1) and a receiver sequential circuit (su2) for executing the handshaking protocol serving to implement the data transfer and for providing a backward cell stop signal (st1) and a forward cell stop signal (st2),
- a first clock (cl1) and a second clock (cl2) for synchronizing the data processing in the first cell (z1) and the second cell (z2), respectively, and
- at least one buffer (f1, f2) on the transmitter side and at least one buffer on the receiver side, with status signals (v1, v2, e; e1, e2) indicating whether the buffer is ready to receive, i.e., is without data, characterized by the following features:
- The handshaking protocol is executable within one clock period of the first and second clocks (cl1, cl2);
- the buffer on the receiver side (z2) is a receiver buffer (f2) which includes at least two buffer registers (r1, r2) and sets a first status empty signal (e1) and a second status empty signal (e2) which indicate to the receiver sequential circuit (su2) that all of the buffer registers (r1, r2) and all buffer registers (r1, r2) but one, respectively, are empty;
- the receiver buffer (f2) further sets a status full signal (v; v1) which indicates to the receiver sequential circuit (su2) that all buffer registers are full;
- the buffer on the transmitter side (z1) is a transmitter buffer (f1) which includes at least two buffer registers (r1, r2) and sets a first status full signal (v1) and a second status full signal (v2) which indicate to the transmitter sequential circuit (su1) that all buffer registers and all buffer registers but one, respectively, are full;
- the transmitter buffer (f1) further sets a status empty signal (e, e1) which indicates to the transmitter sequential circuit (su1) that all buffer registers are empty;
- after a first read statement (re) of a data word from the receiver buffer (f2), an immediately following second read statement (re) will be executed only if the second status empty signal (e2) is not set;
- if the second status empty signal (e2) is set, the data sink (ds) will be stopped by the forward cell stop signal (st), whereby the execution of the second read statement is delayed by at least one clock period;
- after a first write statement of a data word into the transmitter buffer (f1), an immediately following second write statement (wr) will be executed only if the second status full signal (v2) is not set;
- if the second status full signal (v2) is set, the data source (dq) will be stopped by the backward cell stop signal (st1), whereby the execution of the second write statement (wr) is delayed by at least one clock period, and
- after a forward or backward cell stop, the state of the second status empty signal (e2) or the second status full signal (v2) is of no significance for the the second read or write statement yet to be executed.

**2.** A two-way data transfer device as claimed in claim 1, characterized in that the receiver buffer (f2) and/or the transmitter buffer (f1) include at least a predetermined number of further buffer registers (ri) for buffering data with different generation and acceptance rates, the generation and acceptance rates within the clock periods determined by said predetermined number being equal on the average.

**3.** A two-way data transfer device as claimed in claim 2, characterized in that in the case of data interfaces which serve to exchange data beyond a chip boundary, the data transfer can be lengthened to at least two clock periods without altering the handshaking protocol by inserting at least one nop instruction (= no operation) between two successive write statements accessing the port.

**4.** A two-way data transfer device as claimed in claim 2, characterized in that in the case of data interfaces which serve to exchange data beyond a chip boundary, the data transfer can be lengthened to at least two clock periods without altering the handshaking protocol by driving the port on the transmitter side with a clock locked to the write statements which has a clock rate not higher than half the clock rate of the first clock (c11).

5. A two-way data transfer device as claimed in claim 2, characterized in that the predetermined number of further buffer registers (ri) in the transmitter buffer (fi) is at least equal to the number of successive write statements (wr) to the port, and that on an average, the port is driven with a clock locked to the write statements which has a clock rate not higher than half the clock rate of the first clock (c11).

6. A two-way data transfer device as claimed in claim 1, characterized in that it is used for data communication between two asynchronously clocked cells.

7. A two-way data transfer device as claimed in claim 1, characterized in that the data source (dq) and the data sink (ds) include static or quasi-static subcircuits which keep their logic states in the event of a cell stop of arbitrary duration.

8. A two-way data transfer device as claimed in any one of claims 1 to 7, characterized in that such two-way data transfer devices serve as data interfaces in a data-driven, monolithic integrated array processor with a plurality of cells which exchange data with their respective neighbouring cells or beyond the chip boundary.

9. A two-way data transfer device as claimed in claim 2, characterized in that the transmitter buffer (f1) and the receiver buffer (f2) contain the following subcircuits:
   - a data memory (fi) with n addressable registers,
   - a write pointer (pw) controlled by a write signal (ws) and a read pointer (pr) controlled by a read signal (rs), said write and read pointers being clocked in the co and ci phases, respectively,
   - an up/down counter (cb) whose count-up and count-down inputs (auf, ab) are fed with the write signal (ws) and the read signal (rs), respectively, and
   - a decoder (dec) which derives the first and second status empty signals (e1, e2) and the first and second status full signals (v1, v2) from the count of the up/down counter (cb), with
   -- the count capacity of the write and read pointers (pw, pr) and of the up/down counter (cb) being equal to the number n of addressable registers of the data memory (fi).

10. A two-way data transfer device as claimed in claim 1, characterized by the following features:
   - The number of buffer registers in the transmitter buffer (f1) is at least equal to the number of clock periods required to stop the data source (dq) or to start it for an equal length of time, and
   - in the presence of this minimum number of buffer registers, status signals indicating the occupancy level of the transmitter buffer (f1) are not necessary.

**Revendications**

1. Dispositif de transfert bidirectionnel de données (= port de liaison) pour l'interface de transmission de données entre deux cellules (z1, z2) qui échangent des données et qui contiennent chacune une source de données (dq) et un puits de données (ds), comportant
   - une unité de commutation d'émetteur et une unité de commutation de récepteur (su1, su2) pour chaque sens de transmission de données pour l'exécution du protocole de liaison "handshake" utilisé pour le transfert de données, et pour la délivrance d'un signal d'arrêt de cellule aval ou d'un signal d'arrêt de cellules amont (st1, st2),
   - des première et seconde cadences (cl1, cl2) pour la synchronisation du traitement des données dans la première ou la seconde cellule (z1, z2),
   - au moins une mémoire de collecte (f1,f2) pour chaque sens de transmission de données, des signaux d'état (v1, v2, e; e1,e2) indiquant si la mémoire de collecte est prête à la réception ou ne comporte aucune donnée,
   caractérisé par les <u>caractéristiques suivantes</u> :
   - le protocole de liaison peut être exécuté au cours d'une période des première et seconde cadences (cl1, cl2),
   - en tant que mémoire de collecte on utilise, côté récepteur (z2), une mémoire de collecte de récepteur (f2), qui contient au moins deux registres de collecte (r1, r2) et qui positionne des premier et second signaux d'état vide (e1, e2), qui signalent à l'unité de commutation de récepteur (su2) que tous les registres de collecte (r1, r2) ou tous les registres de collecte sauf un sont vides,

- la mémoire de collecte de récepteur (f2) positionne en outre un signal d'état plein (v; v1), qui signale à l'unité de commutation de récepteur (su2) que tous les registres de collecte sont pleins,
- comme mémoire de collecte on utilise côté émetteur (z1), une mémoire de collecte d'émetteur (f1) qui contient au moins deux registres de collecte (r1, r2) et qui positionne des premier et second signaux d'état plein (v1, v2), qui signalent à l'unité de commutation d'émetteur (su1) que tous les registres de collecte ou tous les registres de collecte sauf un sont pleins,
- la mémoire de collecte d'émetteur (f1) positionne en outre un signal d'état vide (e.e1), qui signale à l'unité de commutation d'émetteur (su1) que tous les registres de collecte sont vides,
- après une première instruction de lecture (re) d'un mot de données provenant de la mémoire de collecte de récepteur (s2), une seconde instruction de lecture immédiatement suivante (re) est exécutée lorsque le second signal d'état vide (e2) n'est pas positionné,
- lorsque le second signal d'état vide (e2) est positionné, le puits de données (ds) est arrêté par le signal d'arrêt de cellule amont (st2), ce qui a pour effet que l'exécution de la seconde instruction de lecture est retardé au moins d'une période de cadence,
- après une première indication d'enregistrement d'un mot de données dans la mémoire de collecte d'émetteur (f1), une seconde indication d'enregistrement immédiatement suivante (wr) est exécutée lorsque le second signal d'état plein (v2) n'est pas positionné,
- lorsque le second signal d'état plein (v2) est positionné, le fonctionnement de la source de données (dq est arrêté par le signal d'arrêt de cellule aval (st1), ce qui retarde d'au moins une période de cadence l'exécutée de la seconde indication d'enregistrement (wr),
- après un arrêt de cellule amont ou aval, l'état du second signal d'état vide (e2) ou du second signal d'état plein (v2) est sans importance pour la seconde instruction de lecture ou la seconde instruction d'enregistrement devant être exécutée.

2. Dispositif de transfert bidirectionnel de données suivant la revendication 1, caractérisé par le fait que la mémoire de collecte d'émetteur et/ou la mémoire de collecte de récepteur (f1, f2) contiennent au moins un nombre prédéterminé d'autres registres de collecte (ri), qui sont utilisés pour réaliser le tamponnage de données avec des cadences différentes de production et de prélèvement, les cadences de production et de prélèvement étant en moyenne égales à l'intérieur des périodes de cadence déterminées par le nombre prédéterminé.

3. Dispositif de transfert bidirectionnel de données suivant la revendication 2, caractérisé par le fait que dans le cas d'interfaces de transmission de données, qui s'étendent au-delà d'une limite de microplaquette, le transfert de données peut être prolongé sans modification du protocole de liaison, au moins pendant une période égale au double de la période de cadence, et pendant laquelle au moins une instruction nop (= non fonctionnement) est insérée entre deux instructions d'enregistrement, qui accèdent au port et qui sont directement successives.

4. Dispositif de transfert bidirectionnel de données suivant la revendication 2, caractérisé par le fait que dans le cas d'interfaces de transmission de données, qui s'étendent au-delà d'une limite de microplaquette, le transfert des données peut être prolongé sans modification du protocole de liaison au moins pendant une période égale au double de la période de cadence et pendant laquelle, sur le côté émission, le port est commandé avec une cadence qui est couplée aux instructions d'enregistrement et qui possède au maximum une fréquence égale à la moitié de celle de la première cadence (cl1).

5. Dispositif de transfert bidirectionnel de données selon la revendication 2, caractérisé en ce que le nombre prédéterminé des autres registres de collecte (ri) dans la mémoire de collecte d'émetteur (fi) est au moins égal au nombre des instructions d'enregistrement (wr) directement successives appliquées au port et qu'en moyenne le port est commandé par une cadence qui est couplée aux instructions d'enregistrement et possède au maximum une fréquence égale à la moitié de la fréquence de la première cadence (cl1).

6. Dispositif de transfert bidirectionnel de données suivant la revendication 1, caractérisé en ce qu'il est utilisé pour la communication de données entre deux cellules commandées de façon cadencée d'une manière asynchrone.

7. Dispositif de transfert bidirectionnel de données selon la revendication 1, caractérisé en ce que la source de données (dq) et le puits de données (ds) contiennent des circuits stationnés ou quasi-statiques, qui conservent leur état logique pour un arrêt de cellule amont d'une longueur quelconque.

8. dispositif de transfert bidirectionnel de données selon l'une des revendications 1 à 7, caractérisé en ce que de tels dispositifs de transfert bidirectionnels de données sont utilisés en tant qu'interfaces de transmission de données dans le cas d'un processeur en réseau intégré de façon monolithique et commandé par les données et qui comporte une multiplicité de cellules, qui échangent des données avec les cellules voisines respectives ou au-delà de la limite de la microplaquette.

9. Dispositif de transfert bidirectionnel de données selon la revendication 2, caractérisé en ce que la mémoire de collecte d'émetteur et la mémoire de collecte de récepteur (f1, f2) contiennent les circuits partiels suivants :
   - une mémoire de données (fi) comportant n registres adressables,
   - un indicateur d'enregistrement ou de lecture (pw, pr) commandé par un signal d'enregistrement ou un signal de lecture (ws, rs), l'indicateur d'enregistrement étant commandé de façon cadencée pendant la phase (co) et l'indicateur de lecture, pendant la phase (ci),
   - un compteur progressif / régressif (cb), à l'entrée de comptage progressif ou régressif (auf, ab) duquel est envoyé le signal d'enregistrement ou de lecture (ws, rs),
   - un circuit décodeur (dec), qui tire de l'état de comptage du compteur progressif / régressif (cb) les premier et second signaux d'état vide (e1, e2) et les premier et second signaux d'état plein (v1, v2),
   - la capacité de comptage de l'indicateur d'enregistrement et de l'indicateur de lecture (pw, pr) ainsi que du compteur progressif / régressif (cb) est égale au nombre n des registres adressables de la mémoire de données (fi).

10. Dispositif de transfert bidirectionnel de données suivant la revendication 1, caractérisé par les caractéristiques suivantes :
   - la mémoire de collecte d'émetteur (f1) possède au moins autant de registres de collecte qu'il faut de périodes de cadence pour arrêter ou faire démarrer, pendant une même durée, la source de données (dq), et
   - dans le cas de ce nombre minimum de registres de collecte, des signaux d'état concernant le degré de remplissage de la mémoire de collecte d'émetteur (f1) ne sont pas nécessaires.

# FIG. 1

# FIG. 2

FIG.3

FIG.4

# FIG. 5

e1  e2  v2  v1

ci — dec

cb

auf — ab

pw    pr    la

(co) ws    1 2 ..... 8    1 2 .... 7 8    (co) rs

ci    uw8    ur1    co

di / 12 — iv — 8 ......... 1 — fi — ov — do / 12

| ws | rs | Zähler (cb) |
|----|----|-------------|
| 0 | 0 | — |
| 0 | 1 | ab |
| 1 | 0 | auf |
| 1 | 1 | — |

| Decoder (dec) | | | | e1 | e2 | v2 | v1 |
|---|---|---|---|----|----|----|----|
| 0 | 0 | 0 | 0 | 1 | 1 | 0 | 0 |
| 0 | 0 | 0 | 1 | 0 | 1 | 0 | 0 |
| 0 | 0 | 1 | 0 | | | | |
| | ⋮ | | | 0 | 0 | 0 | 0 |
| 0 | 1 | 1 | 0 | | | | |
| 0 | 1 | 1 | 1 | 0 | 0 | 1 | 0 |
| 1 | 0 | 0 | 0 | 0 | 0 | 1 | 1 |